# FASCICULE DE BREVET EUROPEEN

(11) **EP 0 720 701 B1**
(45) Date de publication et mention de la délivrance du brevet: **13.10.1999**
(21) Numéro de dépôt: 95925038.2
(22) Date de dépôt: 11.07.1995
(51) Int. Cl.: F16D 13/58

(54) **COUVERCLE POUR MECANISME D'EMBRAYAGE ET MECANISME D'EMBRAYAGE COMPORTANT UN TEL COUVERCLE**
KUPPLUNGSDECKEL UND KUPPLUNG MIT EINEM SOLCHEN DECKEL
CLUTCH COVER AND CLUTCH COMPRISING SUCH A COVER

(30) Priorité: 25.07.1994 FR 9409273
(43) Date de publication de la demande: 10.07.1996
(73) Titulaire: VALEO, 75017 Paris (FR)
(72) Inventeur: CARPI, Jean-Pierre, F-80920 Toutencourt (FR); HAGNERE, Raymond, F-80080 Amiens (FR)
(74) Mandataire: Gamonal, Didier
(86) Numéro de dépôt international: FR9500928
(87) Numéro de publication internationale: WO9603590

(56) Documents cités:
- BE-A- 549 987
- GB-A- 2 156 920
- US-A- 2 695 688
- US-A- 2 777 496

## Description

La présente invention concerne les couvercles pour mécanisme d'embrayage, notamment pour véhicules automobiles, et les mécanismes d'embrayages comportant un tel couvercle tel que décrit dans le document FR-A-2 585 424.

Ainsi qu'on le sait un mécanisme d'embrayage comporte, de manière unitaire, un ensemble de pièces annulaires à savoir un couvercle, un plateau de pression usuellement en fonte et des moyens élastiques à action axiale, usuellement un diaphragme.

Le couvercle est destiné à être rapporté sur un plateau de réaction, qui, dans l'application pour véhicule automobile, est destiné à être fixé sur le vilebrequin du moteur du véhicule. Le plateau de pression offre une face de friction pour un disque de friction, qui, dans un véhicule automobile, est calé en rotation sur l'arbre d'entrée de la boîte de vitesse.

L'embrayage est donc une pièce rotative et pour cette raison il y a lieu de l'équilibrer dynamiquement. Usuellement cet équilibrage dynamique est réalisé à l'aide de perçages pratiqués dans le plateau de pression. Une telle solution n'est pas entièrement satisfaisante car elle entraîne la formation de points chauds au niveau des dits perçages.

Pour cette raison il est préférable de réaliser cet équilibrage à l'aide d'organes d'équilibrage, tels que des rivets d'équilibrage montés à la faveur de trous réalisés par avance dans le couvercle. Ainsi, à l'aide d'une machine on peut déterminer l'endroit où il faut monter le ou les dits organes d'équilibrage. Un tel couvercle est connu par exemple du GB-A-2 156 920.

Pour affiner encore cet équilibrage on peut songer à percer le ou les organes d'équilibrage. Il en résulte lors du perçage que l'organe d'équilibrage peut être entraîné en rotation, au détriment de sa solidarisation au couvercle.

La présente invention a pour objet de pallier cet inconvénient de manière simple et économique et donc de créer de nouveaux moyens permettant un blocage en rotation de l'organe d'équilibrage.

Suivant l'invention un couvercle pour mécanisme d'embrayage du type sus-indiqué est caractérisé en ce qu'au moins une entaille est pratiquée dans le couvercle au voisinage d'un trou de fixation de l'organe d'équilibrage, et en ce que l'entaille consiste en une creusure réduisant localement l'épaisseur du couvercle.

Grâce à l'invention, lors de la fixation de l'organe d'équilibrage, de la matière du dit organe peut pénétrer dans la dite entaille en sorte qu'un blocage en rotation de l'organe d'équilibrage est réalisé par coopération de formes. Il est donc possible de percer par la suite l'organe d'équilibrage sans risque de désolidarisation de celui-ci.

La creusure n'affecte donc pas de part en part le couvercle en sorte que, lors du sertissage de l'organe d'équilibrage, l'écoulement de matière (le fluage) se produisant est mieux canalisé. En outre le couvercle conserve sa rigidité.

Avantageusement pour ce faire l'organe d'équilibrage est monté par sertissage sur le couvercle. Cet organe consiste avantageusement en un rivet d'équilibrage avec une tête de forme tubulaire propre à être percée pour affinage de l'équilibrage.

Avantageusement les creusures ont une forme oblongue et débouchent à une de leurs extrémités radialement dans le trou de l'organe d'équilibrage.

Avantageusement, pour un meilleur blocage en rotation, plusieurs entailles ou creusures sont pratiquées au voisinage du trou de fixation de l'organe d'équilibrage. Ces creusures ou entailles peuvent former des pétales issus d'un coeur constitué par le trou de fixation.

Suivant l'invention un mécanisme d'embrayage du type sus-indiqué est caractérisé en ce qu'il comporte un couvercle selon l'invention.

La description qui va suivre illustre l'invention en regard des dessins annexés dans lesquels :
- la figure 1 est une vue en coupe axiale d'un mécanisme d'embrayage selon l'invention ;
- la figure 2 est une vue à plus grande échelle d'un détail de la figure 1 correspondant à l'encart II de cette figure 1 ;
- la figure 3 est une vue en élévation d'un couvercle selon l'invention ;
- la figure 4 est une vue à plus grande échelle d'un détail de la figure 3 correspondant à l'encart IV de cette figure 3 ;
- la figure 5 est une vue à plus grande échelle d'un détail de la figure 3 correspondant à l'encart V de cette figure 3 ;
- la figure 6 est une vue partielle en coupe selon la ligne VI-VI de la figure 5 ;
- la figure 7 une vue analogue à la figure 6 avec montage d'un organe d'équilibrage.

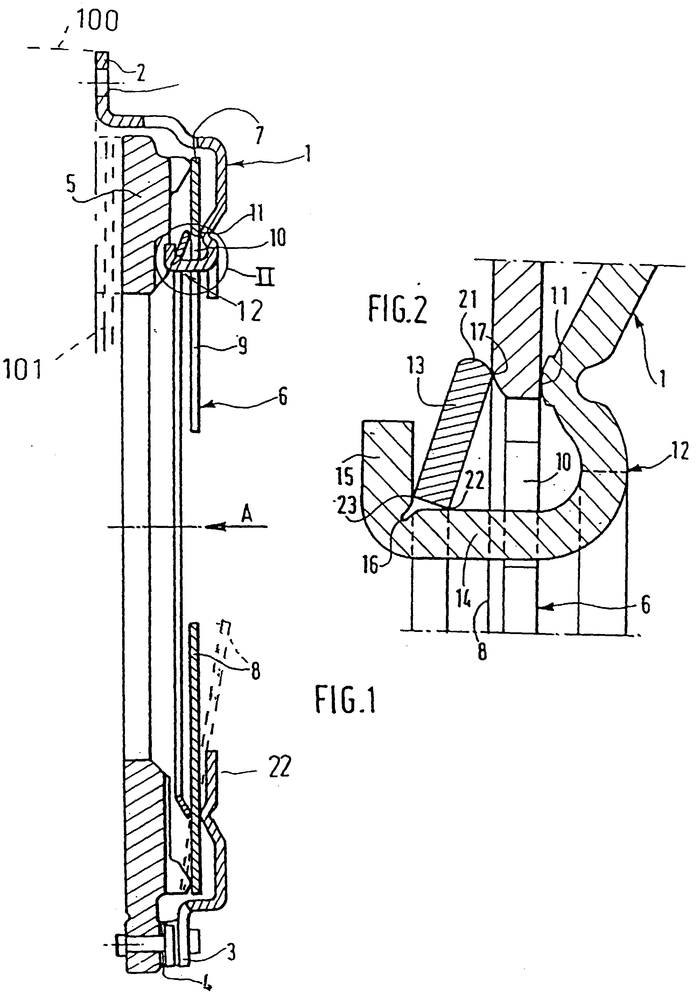

Dans les figures 1 et 2 est illustré un mécanisme d'embrayage à diaphragme pour véhicules automobiles. Dans cette figure 1 on a schématisé en 100 et en 101 respectivement le plateau de réaction et le disque de friction que comporte un embrayage. Ainsi qu'on le sait un embrayage pour véhicule automobile comporte un plateau de réaction 100, un disque de friction 101 et un mécanisme d'embrayage comprenant, de manière unitaire, un ensemble de pièces annulaires à savoir : un couvercle 1 usuellement en tôle emboutie, un plateau de pression 5 usuellement en fonte et des moyens élastiques à action axiale 6.

Ici ces moyens élastiques 6 consistent en un diaphragme et le couvercle 1, en forme d'assiette creuse, comporte un fond globalement d'orientation transversale et troué centralement. Ce fond est prolongé à sa périphérie externe par une jupe entourant ici le diaphragme 6 et plateau de pression 5. Cette jupe est prolongée elle-même par un rebord, globalement d'orientation transversale, dirigée radialement en direction opposée à l'axe de l'ensemble.

Ce rebord forme donc la périphérie externe du couvercle 1 et comporte une première série de plages coplanaires 2 par lesquelles il est destiné à être fixé sur le plateau de réaction 100. Ce rebord comporte également une deuxième série de plages coplanaires 3, en retrait axialement par rapport aux plages 2, par lesquelles il est attelé, de manière connue en soi, par des languettes élastiques 4, ici d'orientation tangentielle, au plateau de pression 5 lié ainsi en rotation au couvercle avec mobilité axiale.

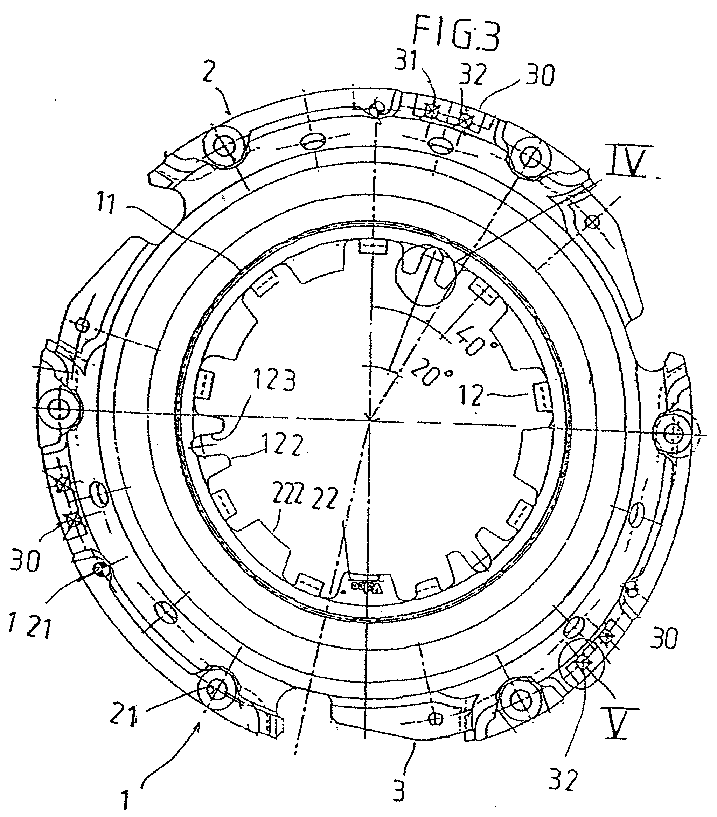

Ici les plages 2 comportent des trous 120, 121 (figure 3) pour respectivement le passage d'organe de fixation du couvercle 1 au plateau de réaction 100 et de pions de centrage portés par le plateau de réaction 100. Les plages 3 sont également trouées pour le montage des languettes de rappel 4, qui sont fixées par des organes de fixation à l'une de leurs extrémités à des pattes radiales du plateau 5 et à leur autre extrémité à la plage 3 à la faveur des dits trous.

Le diaphragme 6 comporte une partie périphérique en forme de rondelle Belleville 7, une partie centrale fragmentée en doigts radiaux 8 par des fentes 9. Ici des passages élargis 10 sont ménagés entre les doigts 8 au niveau de la zone d'enracinement des doigts 8 à la rondelle 7. Ce diaphragme a une forme tronconique à l'état libre.

La périphérie externe de la rondelle Belleville 7 agit sur un bossage annulaire fragmenté (non référencé à la figure 1) du plateau de pression 5, tandis que la périphérie interne de cette rondelle 7 prend appui sur un appui primaire 11 constitué ici par un embouti pratiqué dans le fond du couvercle 1 en tôle emboutie.

Normalement l'embrayage est engagé et le diaphragme 6 prend appui sur l'embouti 11 pour action sur le bossage du plateau de pression 5 afin de serrer les garnitures de frottement du disque de friction 101 entre les plateaux de pression et de réaction. Pour désengager l'embrayage il faut agir en poussant, dans le sens de la flèche A de la figure 1, sur l'extrémité des doigts 8 à l'aide d'une butée de débrayage (non représentée) pour faire basculer le diaphragme 6 et faire cesser son action sur le plateau de pression 5.

Les languettes 4 rappellent alors le plateau 5 en direction du fond du couvercle 1. A cet effet le diaphragme 6 est monté de manière pivotante sur le couvercle 1 à l'aide de moyens d'assemblage assujettissant de manière pivotante le diaphragme au couvercle. Ces moyens comportent ici l'appui primaire 11 précité, des pattes de fixation 12 et une couronne 13 de forme tronconique. Les pattes 12 sont issues d'un seul tenant du fond du couvercle par découpe et pliage et alternent ici avec des pattes de butées 22 globalement d'orientation transversale.

Certaines pattes des butées, à savoir les pattes 122, sont dotées d'évidements 123 pour formation d'un détrompeur. Comme visible dans la partie basse de la figure 1 les doigts 8 s'appuient sur les pattes 22 lorsque le mécanisme d'embrayage n'est pas fixé sur le plateau de réaction 100. Après fixation du mécanisme le diaphragme 6 est globalement plan lorsque le disque de friction 101 est neuf.

De manière connue en soi les pattes de fixation 12 comportent une partie axiale 14 traversant les passages 10 du diaphragme et une aile d'extrémité radiale 15 pliée radialement en direction opposée à l'axe de l'ensemble à la faveur d'une saignée 16 (figure 2) pour définition d'un coude de calage et montage de la couronne 13 entre le diaphragme 6 et l'aile 15. La périphérie de la couronne 13 offre un appui secondaire 17 au diaphragme 6 et ce en regard de l'appui primaire 11.

L'appui 17 est formé à la faveur d'une arrête externe arrondie 21 de la couronne 13, qui présente à sa périphérie interne des arrêtes 22,23 au contact respectivement de la partie 14 et de l'aile 15. Une zone arrondie raccorde l'embouti 11 à la partie axiale 14 des pattes 12. Le diaphragme est ainsi monté de manière pivotante entre ces appuis 17 et 11 et lors du désengagement de l'embrayage le diaphragme 6 prend appui sur l'appui secondaire 17 ici élastique.

Ceci étant rappelé on notera que le mécanisme d'embrayage constitue un ensemble unitaire rotatif qu'il y a lieu d'équilibrer dynamiquement notamment pour des raisons de sécurité. A cet effet le couvercle 1 présente des trous 31 dits trous d'équilibrage, pour le montage et la fixation d'organes d'équilibrage 132.

Suivant l'invention un couvercle du type sus-indiqué est caractérisé en ce qu'il présente au moins une entaille 32 pratiquée au voisinage d'un trou d'équilibrage 31 et en ce que l'entaille consiste en une creusure réduisant localement l'épaisseur du couvercle. La creusure 32 a une forme oblongue et débouche radialement à l'une de ses extrémités dans l'ouverture ou trou 31. L'autre extrémité de la creusure 32 est de forme semi-circulaire (figure 6). En variante cette extrémité peut-être inclinée.

Ici quatre creusures 32 sont prévus par trous 31. Ces creusures sont réparties régulièrement circonférentiellement à 90° les unes par rapport aux autres. Les creusures s'étendent donc globalement radialement avec deux paires de creusures diamétralement opposées. Ici les trous 31 appartiennent au rebord périphérique externe du couvercle. Les trous 31 appartiennent à des plages coplanaires 30 du rebord décalées axialement par rapport aux plages 2 et 3 précitées. Ces plages 30 sont réparties ici à 120° les unes par rapport aux autres, chaque plage 30 comportant deux trous 31 à creusures 32 pour le montage d'organes d'équilibrage 132. Ici ces organes 132 consistent en des rivets.

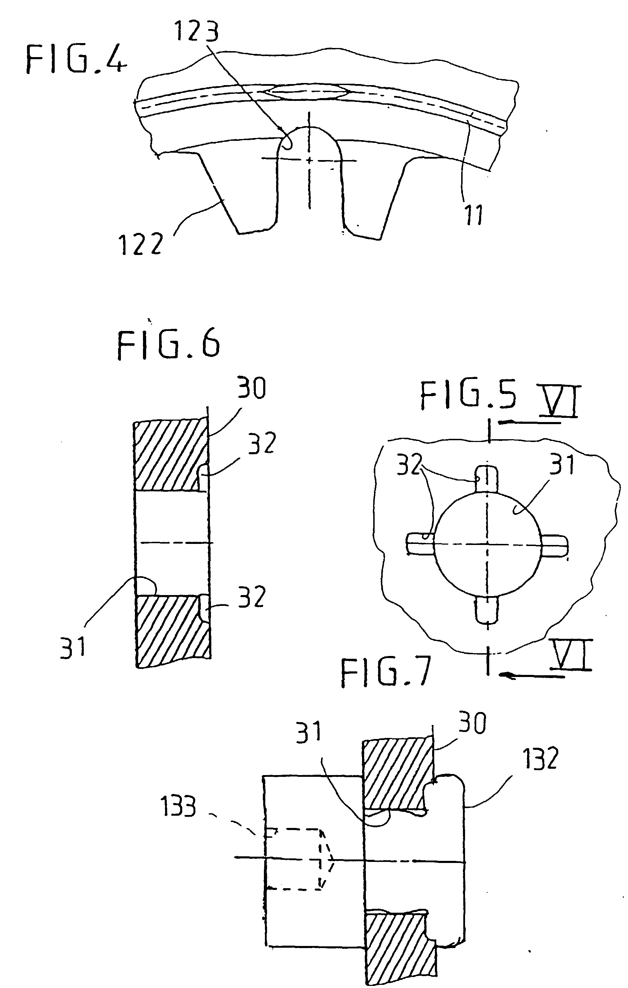

Ainsi qu'on l'aura compris lors du montage par sertissage du rivet 132 dans l'un des trous 31, la matière du dit rivet est admise à fluer et donc à remplir les creusures 32, qui sont avantageusement peu profonde, en sorte qu'une liaison en rotation par coopération de formes en rotation est réalisée entre le rivet et le couvercle comme visible dans la figure 7, dans laquelle on a amplifié la déformation que subit la queue du rivet 132 lors du sertissage.

Ce rivet présente une tête cylindrique, ici en forme de pion. Grâce à l'invention il devient possible de percer en 133 cette tête pour affiner l'équilibrage du mécanisme grâce à une machine d'équilibrage sélectionnant le ou les trous 31 dans lequel (ou lesquels) doit être monté le rivet 132. Ces rivets 132 peuvent être donc percés après leur fixation sans risque de rotation.

La fixation des rivets d'équilibrage 132 est donc ferme et ne nécessite pas de modifier de manière profonde l'outillage de fabrication du couvercle.

Bien entendu la présente invention n'est pas limitée à l'exemple de réalisation décrite en particulier les trous de fixation des organes d'équilibrage peuvent être réalisés par exemple dans les plages coplanaires 3 ou en variante, bien que cela soit moins favorable pour des questions d'inertie dans les pattes de buttée 22.

Au lieu de rivets d'équilibrage on peut utiliser d'autres organes d'équilibrage, fixés de préférence par sertissage.

Le diaphragme peut être monté de manière pivotante sur le couvercle à l'aide de joncs d'appui portés par les pattes de fixation 12 ou en variante à l'aide de colonnettes. L'embrayage peut-être du type tiré, le diaphragme s'appuyant sur le couvercle (à sa périphérie externe) et sur le plateau de pression.

Bien entendu au lieu d'un diaphragme, le mécanisme d'embrayage peut comporter des ressorts à boudins et des leviers d'embrayages les dits ressorts agissant entre le couvercle et le plateau.

## Revendications

1. Couvercle pour mécanisme d'embrayage, notamment pour véhicule automobile, du genre comportant des trous (31), dit par commodité trous d'équilibrage, pour le montage d'organe d'équilibrage (132), caractérisé en ce que au moins une entaille (32) est pratiquée dans le couvercle au voisinage d'un trou d'équilibrage (31), et en ce que l'entaille (32) consiste en une creusure réduisant localement l'épaisseur du couvercle (1).

2. Couvercle selon la revendication 1, caractérisé en ce que la creusure (32) a une forme oblongue et débouche radialement à l'une de ses extrémités dans le trou d'équilibrage (31).

3. Couvercle selon la revendication 2, caractérisé en ce que l'autre extrémité de la creusure (32) est de forme semi-circulaire.

4. Couvercle selon la revendication 1, caractérisé en ce que les creusures sont peu profondes.

5. Couvercle selon la revendication 1, caractérisé en ce qu'il comporte au niveau de chaque trou d'équilibrage (31) quatre creusures (32), globalement d'orientation radiale répartie à 90° les unes par rapport aux autres.

6. Couvercle selon la revendication 1, présentant un rebord périphérique globalement d'orientation transversale, avec des premières plages (2) coplanaires pour la fixation du couvercle (1) à un plateau de réaction (100) de l'embrayage, caractérisé en ce que les trous d'équilibrage (31) avec leur entaille associée (32) sont ménagés dans le dit rebord à la faveur de plages coplanaires (30) décalées axialement par rapport aux premières plages coplanaires (2).

7. Mécanisme d'embrayage comportant un couvercle (1), un plateau de pression (5), lié en rotation au couvercle (1) avec mobilité axiale, et un diaphragme (6) monté de manière pivotante sur le couvercle (1) pour action sur le plateau de pression (5), caractérisé en ce qu'il comporte un couvercle (1) selon la revendication 1.

8. Mécanisme selon la revendication 7, caractérisé en ce qu'il comporte au moins un rivet d'équilibrage (132) avec une tête percée et en ce que le dit rivet (132) est monté dans un trou d'équilibrage (31) en étant bloqué en rotation par une entaille (32) associée au trou d'équilibrage (31).

## Patentansprüche

1. Deckel für einen Kupplungsmechanismus, insbesondere für Kraftfahrzeuge, umfassend, der Einfachheit halber als Ausgleichlöcher bezeichnete, Löcher (31) für das Einsetzen eines Befestigungsorgans (132), **dadurch gekennzeichnet**, daß wenigstens eine Einkerbung (32) in den Deckel in der Nähe eines Ausgleichlochs (31) eingearbeitet ist und daß die Einkerbung (32) aus einer Einsenkung besteht, die örtlich die Dicke des Deckels (1) verringert.

2. Deckel nach Anspruch 1, **dadurch gekennzeichnet**, daß die Einsenkung (32) eine längliche Form aufweist und radial an einem ihrer Enden im Ausgleichloch (31) mündet.

3. Deckel nach Anspruch 2, **dadurch gekennzeichnet**, daß das andere Ende der Einsenkung (32) halbkreisförmig ausgebildet ist.

4. Deckel nach Anspruch 1, **dadurch gekennzeichnet**, daß die Einsenkungen eine geringe Tiefe aufweisen.

5. Deckel nach Anspruch 1, **dadurch gekennzeichnet**, daß er an jedem Ausgleichloch (31) vier Einsenkungen (32) umfaßt, die insgesamt radial ausgerichtet und in einem Winkel von 90° zueinander verteilt sind.

6. Deckel nach Anspruch 1, aufweisend eine insgesamt quer ausgerichtete Umfangsrandleiste mit ersten komplanaren Bereichen (2) zur Befestigung des Deckels (1) an einer Gegenanpreßplatte (100) der Kupplung, **dadurch gekennzeichnet**, daß die Ausgleichlöcher (31) mit ihrer zugehörigen Einkerbung (32) in die besagte Randleiste mittels im Verhältnis zu den ersten komplanaren Bereichen (2) axial versetzter komplanarer Bereiche (30) eingearbeitet sind.

7. Kupplungsmechanismus, umfassend einen Deckel (1), eine drehfest und axial beweglich mit dem Deckel (1) verbundene Druckplatte (5) und eine Membranfeder (6), die schwenkbar auf dem Deckel (1) gelagert ist, um auf die Druckplatte (5) einzuwirken, **dadurch gekennzeichnet**, daß er einen Deckel (1) nach Anspruch 1 umfaßt.

8. Mechanismus nach Anspruch 7, **dadurch gekennzeichnet**, daß er mindestens einen Ausgleichniet (132) mit einem aufgebohrten Kopf umfaßt und daß der besagte Niet (132) in ein Ausgleichloch (31) eingesetzt ist, wobei er durch eine zum Ausgleichloch (31) gehörende Einkerbung (32) gegen Verdrehung gesichert ist.

## Claims

1. A cover plate for a clutch mechanism, especially for a motor vehicle, of the kind comprising holes (31), referred to for convenience as balancing holes, for the fitting of balancing members (132), characterised in that at least one rebate (32) is formed in the cover plate in the vicinity of a balancing hole (31), and in that the rebate (32) consists of a recess which reduces the local thickness of the cover plate (1).

2. A cover plate according to Claim 1, characterised in that the recess (32) has an oblong form and is open radially at one of its ends into the balancing hole (31).

3. A cover plate according to Claim 2, characterised in that the other end of the recess (32) is of semicircular form.

4. A cover plate according to Claim 1, characterised in that the recesses are shallow.

5. A cover plate according to Claim 1, characterised in that it includes, at the level of each balancing hole (31), four recesses (32) which are orientated generally radially and which are spaced apart from each other by 90 degrees.

6. A cover plate according to Claim 1, having a generally transversely orientated peripheral flange, with first coplanar portions (2) for fastening the cover plate to a reaction plate (100) of the clutch, characterised in that the balancing holes (31) with their associated rebates (32) are formed in the said flange, in coplanar portions (30) thereof which are offset axially with respect to the first coplanar portions (2).

7. A clutch mechanism comprising a cover plate (1), a pressure plate (5) coupled in rotation to the cover plate (1) but movably axially with respect thereto, and a diaphragm (6) which is mounted pivotally on the cover plate (1) so as to act on the pressure plate (5), characterised in that it includes a cover plate (1) according to Claim 1.

8. A mechanism according to Claim 7, characterised in that it includes at least one balancing rivet (132) with a pierced head, and in that the said rivet (132) is mounted in a balancing hole (31), being prevented from rotation by a rebate (32) associated with the balancing hole (31).
